(19) **Europäisches Patentamt**

**European Patent Office**

**Office européen des brevets**

(11) **EP 1 139 690 B1**

(12) **FASCICULE DE BREVET EUROPEEN**

(45) Date de publication et mention
de la délivrance du brevet:
**22.01.2003 Bulletin 2003/04**

(51) Int Cl.⁷: $H04Q\ 7/38$, G01S 5/14, G01S 1/04

(21) Numéro de dépôt: **01400815.5**

(22) Date de dépôt: **29.03.2001**

(54) **Procédé de localisation d'un téléphone mobile**

Verfahren zur Ortsbestimmung eines Mobiltelefons

Method for determining the location of a mobile phone

(84) Etats contractants désignés:
**DE FR GB**

(30) Priorité: **29.03.2000 FR 0004368**

(43) Date de publication de la demande:
**04.10.2001 Bulletin 2001/40**

(73) Titulaire: **SAGEM S.A.**
**75015 Paris (FR)**

(72) Inventeurs:
• **Heurtaux, M. Frédéric**
**13610 Le Puy Ste Reparade (FR)**
• **Staebler, M. Patrick**
**78460 Villepreux (FR)**

(74) Mandataire: **Schmit, Christian Norbert Marie**
**Cabinet Christian Schmit et Associés,**
**8, place du Ponceau**
**95000 Cergy (FR)**

(56) Documents cités:
**US-A- 5 604 765      US-A- 5 774 829**
**US-A- 5 987 329**

• **STEPHEN BANCROFT: "An Algebric Solution of the GPS Equations" IEEE TRANSACTIONS ON AEROSPACE AND ELECTRONICS, vol. AES-21, no. 7, janvier 1985 (1985-01), pages 56-59, XP000972710 Piscataway NJ**

**EP 1 139 690 B1**

**Description**

La présente invention a pour objet un procédé de localisation d'un téléphone mobile qui est en relation avec un réseau de stations de base. Elle a pour objet d'offrir des possibilités nouvelles d'utilisation des téléphones mobiles.

Dans le domaine de la téléphonie mobile, il s'avère de plus en plus nécessaire de localiser, de repérer, les téléphones mobiles en cours de conversation et même éventuellement en permanence. Dans la pratique une organisation américaine, la FCC (Federal Communications Commission), prévoit que le repérage des téléphones mobiles sera effectué avec une précision meilleure que 125 mètres, et ce pendant au moins 67 % du temps. Autrement dit, la localisation devient une nécessité pour les téléphones mobiles des futures générations.

Brièvement, la localisation d'un téléphone mobile permet de le repérer en cours d'utilisation. Lorsqu'il a été volé, elle peut donner des indications pour retrouver le voleur. En cas d'urgence, le seul fait de communiquer sa localisation peut permettre à des secours d'intervenir auprès de l'utilisateur. Par ailleurs, la localisation géographique permettrait de dispenser aux utilisateurs des messages, éventuellement publicitaires, en relation avec l'endroit où ils se trouvent.

Les procédés de localisation envisageables comportent l'installation dans chaque téléphone mobile d'un récepteur de type GPS (Global Positioning System - Système Mondial de Localisation), GLONASS, GALILEO ou autre par lequel le téléphone mobile capterait des émissions en provenance de satellites pour connaître sa position. Bien que cette technique soit tout à fait au point, elle n'est pas parfaitement adaptée à la localisation de téléphones mobiles. En effet, l'utilisation d'un système de radionavigation de type GPS est adaptée au repérage de récepteurs se trouvant dans des espaces où la propagation radioélectrique n'est pas perturbée. Typiquement sur mer, en l'air et dans des zones dégagées, le fonctionnement de ces systèmes de localisation est optimal. Par contre, l'utilisation des téléphones mobiles dans des zones urbaines se réalise le plus souvent dans des espaces où la propagation des ondes est perturbée, voire impossible. Alors que la réception correcte des signaux de quatre satellites est nécessaire pour déterminer la localisation, il arrive que ce minimum de satellites visibles ne soit pas atteint. Dans certains cas, notamment si l'altitude du téléphone mobile n'est pas recherchée, trois satellites peuvent suffire. Mais même dans ce cas, le nombre de satellites correctement perçus par le téléphone mobile peut être inférieur au minimum nécessaire.

Dans d'autres cas, le nombre de satellites perçus correctement par le mobile est théoriquement suffisant pour le type de localisation recherché, mais la précision de localisation obtenue n'est pas suffisante. On parle alors de configuration satellitaire pauvre.

D'autres solutions de localisation envisageables sont décrites dans le document «Positioning Systems in Intelligent Transportation Systems» dû à Messieurs Chris DRANE et Chris RIZOS et publié par Artech House Book, BOSTON LONDON, 1998, 31 janvier. Il y est envisagé d'effectuer des localisations par angle d'arrivée. Ce système nécessite cependant la réalisation d'aériens de stations de base multiples permettant, par la discrimination des signaux radioélectriques reçus sur plusieurs lobes, de désigner une direction de provenance des émissions reçues. A partir d'au moins trois directions (à partir d'au moins trois stations de base), il est possible de repérer la position du téléphone mobile qui émet. Cette solution présente l'inconvénient que des aériens nombreux et encombrants doivent être installés, pour chaque station de base, en façade des maisons. Ceci n'est pas toujours réalisable notamment pour des questions ornementales. En outre dans ce cas, le mobile ne peut pas se localiser, il doit émettre pour que les stations de base le localisent.

Une deuxième solution envisagée avec des stations de base comporte une mesure de temps. A partir d'une mesure de date d'arrivée de signaux radioélectriques sur une station de base ou un téléphone mobile, on peut déterminer en théorie l'éloignement d'un téléphone mobile d'une station de base. En combinant des informations d'éloignement du téléphone mobile de plusieurs stations de base, on peut déterminer la localisation de ce téléphone mobile.

Dans l'état actuel de la technique, une mesure de temps d'arrivée est déjà effectuée par une station de base, dans des équipements existants. Cette mesure a pour but de faire en sorte que des émissions provenant d'un téléphone mobile arrivent à cette station de base d'une manière synchronisée avec la trame de réception de cette station de base. Ainsi, notamment dans le cadre de la téléphonie mobile de type GSM, dans une trame de 4,615 millisecondes, on distingue huit fenêtres temporelles de 577 microsecondes. Compte tenu, qu'une cellule géographique, gouvernée par une station de base, peut avoir une dimension de 30 kilomètres de rayon, la distance de propagation maximale envisagée pour la propagation d'une onde est de l'ordre de 30 Km. Pour une propagation à la vitesse de la lumière, ceci conduit à des retards de phase allant jusqu'à 100 microsecondes. Ce qui est significatif par rapport à la durée des fenêtres temporelles. De façon à obtenir à l'endroit d'une station de base une présence des bits significatifs pendant des micro-fenêtres de 3.69 microsecondes (correspondant à une vitesse de modulation de 270 KHz), on a prévu un calage des temps d'arrivée selon soixante niveaux de retard, dans la pratique 64 niveaux.

Pour un mobile très proche de la station de base, le retard temporel sera nul. Pour un mobile éloigné, le retard temporel, et donc une avance d'émission TA (durée aller et retour), devra correspondre à environ 300 microsecondes. Pour communiquer au mobile la durée d'avance d'émission TA à mettre en oeuvre, une station de base lui envoie un message de TA codé sur 6 bits (pour 64 niveaux) permettant de déterminer cette avance.

En pratique, cette avance étant synonyme d'une durée de propagation, elle est également synonyme d'un éloignement du mobile de la station de base dans 64 couronnes concentriques autour de celle-ci : c'est-à-dire avec des largeurs d'environ 550 mètres. Bien que la précision ainsi obtenue ne soit pas insignifiante, elle n'est pas suffisante pour correspondre aux exigences de la norme. En définitive, l'utilisation de l'information TA représentative de cette avance à l'émission n'est pas exploitable pour localiser le téléphone mobile avec suffisamment de précision. Une modification de cette technique consistant à augmenter la précision de l'information TA aurait par ailleurs l'inconvénient de devoir modifier, technologiquement, toutes les stations de base et tous les téléphones mobiles : ce n'est pas prévu pour les téléphones mobiles en service à ce jour.

Le document US5774829A décrit une unité mobile dans laquelle on met en place un récepteur de radionavigation satellitaire, et dont la position est déterminée par l'utilisation de signaux de signalisation de téléphonie mobile en complément aux signaux radioélectriques envoyés par les satellites.

L'invention a pour objet de remédier aux inconvénients cités en proposant un procédé dans lequel, compte tenu des signaux déjà disponibles à l'endroit d'un téléphone mobile, soit la localisation est rendue possible, alors qu'elle ne le serait pas si le nombre de satellites perçus était insuffisant, soit cette localisation est rendue plus précise que la précision obtenue par la localisation par satellites. Dans l'invention, pour simplifier l'explication, on considère que la station de base est un satellite du système de radionavigation. On utilise alors par exemple l'information TA délivrée par la station de base au mobile avec lequel elle est en communication pour servir de temps de propagation. Connaissant par ailleurs une localisation précise de la station de base, le téléphone mobile jouit alors d'une information supplémentaire pour parfaire sa détermination de localisation. On montrera alors que cette information supplémentaire, ne nécessitant aucune modification des procédés normalisés en vigueur, conduit selon les cas soit à rendre possible la localisation, soit à la rendre plus précise.

La localisation de la station de base peut être communiquée au mobile par des signaux de signalisation émis par cette station de base (de manière systématique, ou à la demande), ou par des informations résultant de la mise en oeuvre d'un moyen complémentaire. Au besoin, les téléphones mobiles peuvent garder en une mémoire, de préférence tournante, en regard d'identités de stations de base, des informations de localisation de stations de base avec lesquelles ils sont en relation.

L'invention a donc pour objet un procédé de localisation d'un téléphone mobile selon la revendication 1.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :

- Figure 1 : une représentation géométrique de la position d'un téléphone mobile, d'une station de base et d'un ensemble de satellites conduisant à la localisation perfectionnée selon l'invention ;
- Figure 2 : une représentation schématique du moyen mis en oeuvre supplémentairement dans un téléphone mobile pour accueillir l'invention.

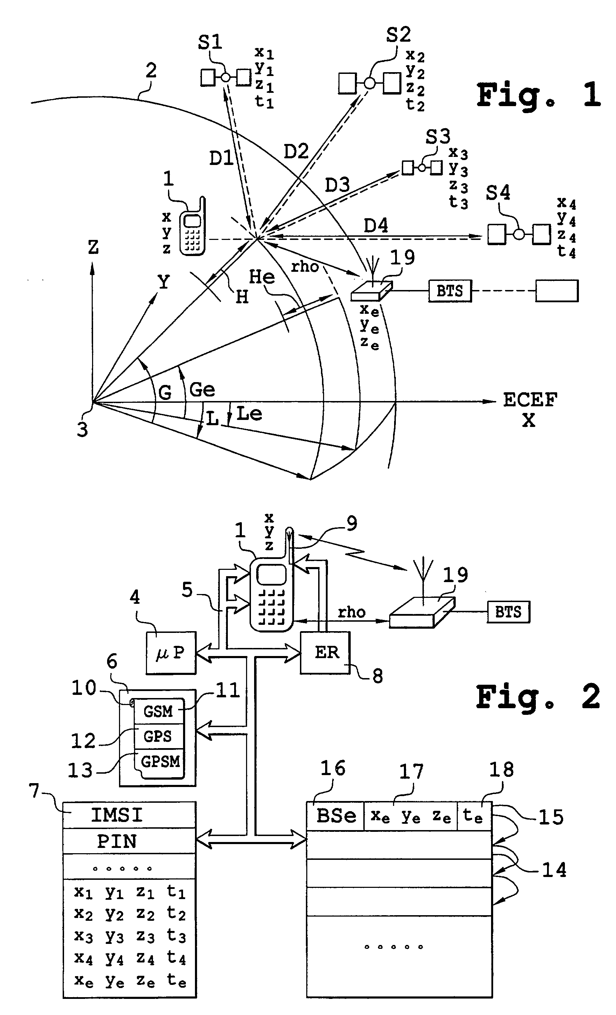

La figure 1 montre une représentation géométrique d'un téléphone mobile 1 devant être localisé avec le procédé de l'invention. Le téléphone mobile 1 est situé par rapport au globe terrestre 2 et à son centre 3 à des coordonnées x, y et z. Ces coordonnées sont inconnues. Ces coordonnées sont référencées dans un repère orthogonal XYZ, dit ECEF (Earth Centered Earth Fixed). Par ailleurs ces coordonnées peuvent être exprimées dans le repère géographique sous la forme d'une longitude L, d'une latitude G et d'une altitude H. L'altitude H est mesurée par rapport au niveau de la mer. Le passage du repérage dans un système à un repérage dans l'autre est de type connu. Le système de repérage du téléphone mobile de l'invention utilise la présence de satellites Si. Ici quatre satellites S1 à S4 sont situés à des distances Di, ici D1 à D4, du téléphone mobile 1. Ces satellites Si émettent continûment des signaux radioélectriques. Ces signaux sont perçus par le téléphone mobile 1. Ces signaux permettent de calculer à chaque instant les positions $x_i$, $y_i$, $z_i$ de ces satellites dans le repère XYZ. Ces signaux sont datés (date $t_i$) par ces satellites. La date $t_i$ elle-même est une information transmise par le signal d'un satellite. La réception par un récepteur de type GPS incorporé dans le téléphone mobile 1 d'un signal de satellite émis à une date $t_i$ se produit à une date $t_{ri}$. La différence des deux dates, $t_{ri} - t_i$, pour peu que le récepteur de type GPS soit synchronisé sur les satellites, est représentative au prorata de la vitesse de la lumière de la distance Di qui sépare le satellite Si du téléphone mobile 1. On verra par la suite les corrections à apporter à cette affirmation.

La figure 2 montre le téléphone mobile perfectionné selon l'invention. Ce téléphone mobile 1 comporte un microprocesseur 4 en relation par l'intermédiaire d'un bus 5 de commande, d'adresses, et de données avec une mémoire programme 6, une mémoire de données 7 et des circuits d'émission-réception 8. Ces circuits d'émission-réception 8 sont reliés à un aérien 9. Le bus est encore relié à un clavier et un dispositif de visualisation du téléphone mobile ainsi qu'à un microphone et à un haut-parleur (non représentés). Pour mettre en oeuvre la fonction de téléphonie mobile la mémoire programme 6 comporte dans un programme 10 un sous-programme 11, intitulé ici GSM pour signifier une des normes possibles d'utilisation de téléphonie mobile. Cependant d'autres normes peuvent être mises en oeuvre dans le principe de communication mis en oeuvre dans le téléphone mobile 1. Selon l'invention, le programme 10 comporte un autre sous-programme 12, intitulé ici GPS en correspondance, permettant notamment un calcul de la position x y z, ou L G H, du téléphone mobile 1.

Le sous-programme 12, de type connu, utilise les moyens 4 à 9 du téléphone mobile 1, dans d'autres gammes de fréquences, pour recevoir les signaux radioélectriques envoyés par les satellites et pour déterminer la position du téléphone mobile par traitement de ces signaux radioélectriques. En définitive le microprocesseur 4 mettant en oeuvre le sous-programme 12 forme le récepteur de radionavigation satellitaire incorporé dans le téléphone mobile 1.

Dans l'invention, dans tous les cas, que le nombre de satellites perçus à un moment donné par le téléphone mobile 1, ou bien la précision de la mesure soient suffisants ou insuffisants, le sous-programme 12 est complété par un sous-programme 13 intitulé GPSM dans lequel la contribution de la position des stations de base va être incorporée pour améliorer la localisation.

La position des stations de base peut par exemple être reçue par transmission radioélectrique et être mémorisée dans une mémoire 14, de préférence tournante, dans des enregistrements 15. Les enregistrements 15 comportent des champs 16 de désignation BSe de station de base (leur identité), des champs 17 représentant les coordonnées de type xe, ye, ze de ces stations de base, et des champs 18 représentant l'éloignement du téléphone mobile de la station de base. Cet éloignement sera de préférence pris égal à c.TA/2 où c représente la vitesse de la lumière. Les informations des champs 16, 17 et 18 peuvent être reçues dans le téléphone mobile 1 par des interrogations spécifiques lancées par le téléphone mobile 1 à la station de base 19. Ces interrogations sont notamment contenues dans des instructions du sous-programme 13. Dans ce cas, les informations des champs 16 à 18 peuvent être transmises par les stations de base sous la forme de messages de type SMS (Sort Message Service - Message de Service Court). Ou bien, il peut être envisagé que ces informations des champs 16 à 18 résultent de la mise en oeuvre de procédés complémentaires.

De préférence la mémoire 14 sera une mémoire tournante de type premier entré premier sorti. Dans ce cas le téléphone mobile, lorsqu'il est en relation avec une station de base, vérifie que l'identité BSi de cette station de base figure dans un champs 16 d'un enregistrement 15. Si ce n'est pas le cas, il interroge la station de base pour qu'elle lui transmette au moins ses coordonnées 17. Ou bien il acquiert d'une autre façon ces coordonnées de station de base. Lorsque la mémoire 14 est pleine un nouvel enregistrement prend la place d'un enregistrement le plus ancien.

Alors que les informations des champs 16 et 17 peuvent être envoyées à la demande au téléphone mobile par la station de base, l'information 18 représentative de l'éloignement sera de préférence prélevée dans le téléphone mobile dans les signaux de signalisation distribués par la station de base. Sur la figure 1 et la figure 2, le téléphone mobile 1 est en relation avec la station de base 19 dont les coordonnées dans le repère XYZ ECEF sont xe, ye, ze correspondant à Le, Ge, He dans le repère géographique. La distance séparant le téléphone mobile 1 de la station de base 19 est désignée par rho.

La distance rho est prise en compte, dans les systèmes de téléphonie mobile de type TDMA (Time Division Multiple Access - Accès Multiple à Répartition dans le Temps) ou autres par l'envoi par la station de base 19 au téléphone mobile 1 une information dite Time Advance TA, représentative d'une anticipation d'émission avec laquelle le téléphone mobile 1 doit émettre ses signaux pour que ceux-ci arrivent en temps utiles dans une fenêtre temporelle que la station de base a alloué dans un canal de communication au téléphone mobile 1.

En pratique le téléphone mobile 1 reçoit son horloge de la station de base. Il se synchronise avec elle, avec toutefois un retard dépendant de la propagation du signal d'horloge jusqu'au téléphone mobile 1. En conséquence l'information de durée d'anticipation TA doit être égale au double de cette durée de propagation. Pour la station de base 19 dont les coordonnées sont xe, ye, ze on notera que cette information d'anticipation sera mémorisée dans le champ 18 sous la désignation te.

Dans l'invention, on utilise donc les informations des champs 17 et 18 qui sont des signaux de signalisation de téléphonie mobile en complément de signaux radioélectriques envoyés par les satellites pour déterminer la position du téléphone mobile. Les signaux de signalisation concernés sont essentiellement la durée d'anticipation te et, à la demande au moins, les signaux xe, ye, ze. Ces derniers peuvent être mémorisés dans la station de base 19. La station de base 19 peut avoir été géographiquement localisée avec précision, au moins une fois, par exemple à l'aide d'un récepteur de type GPS. Comme cette station de base ne bouge pas, la présence permanente d'un récepteur GPS dans cette station de base n'est pas utile. On verra plus loin comment se passer d'une telle localisation par récepteur GPS.

Eventuellement, l'information de distance rho peut être connue de la station de base 19, avant d'être connue par le téléphone mobile 1. En effet, le téléphone mobile 1 est en permanence en relation avec plusieurs stations de base. Même s'il trafique avec une seule d'entre elles, il est connu des autres. Ces autres stations de base peuvent connaître la durée d'anticipation TA qu'elles seraient amenées à prescrire au téléphone mobile 1. Avec ces informations d'anticipation, ces stations de base peuvent calculer, par un système de triangulation analogue au système GPS, une position approximative du téléphone mobile 1. Cette position approximative permet alors de calculer une distance rho plus précise qui peut alors être transmise au téléphone mobile 1 pour que celui-ci l'incorpore dans son calcul de localisation à partir des informations des satellites Si.

La détermination de la position du téléphone mobile 1 sera de préférence la suivante. Avec un système de type GPS, un utilisateur peut déterminer sa position à partir de la position connue de plusieurs satellites. Chaque satellite émet en permanence un signal daté. Un récepteur synchronisé peut alors mesurer le temps de propagation de ce signal et en déduire la distance le séparant d'un satellite particulier. A partir de trois satellites, un tel récepteur est capable d'effectuer une triangulation pour déterminer sa position. Cette position est obtenue en temps réel et autorise une navigation. Chaque mesure de temps de propagation représente le rayon d'une sphère centrée sur un satellite particulier. Le récepteur est sur cette sphère.

Avec deux mesures de distance, la position d'un récepteur est sur un cercle formé par l'intersection de deux sphères. Une troisième mesure simultanée réduit l'intersection à deux points, dont un est très éloigné dans l'espace et est aisément isolé.

Malheureusement, l'horloge du récepteur est affectée d'un biais $\Delta T$ car elle n'est pas synchrone du système GPS. Ce biais est la différence de temps entre l'horloge du récepteur et l'horloge du système GPS et des satellites en particulier. Ce biais d'horloge $\Delta T$ se traduit par une erreur de mesure des temps de propagation des signaux GPS et, par-là même, par une erreur c. $\Delta T$ sur les distances satellite - récepteur (c=299 792 458 m/s). Cette erreur se retrouve sur toutes les distances mesurées par le récepteur. Comme les distances ne sont pas parfaites car entachées d'un biais de temps, elles sont appelées pseudo-distances. Le biais de temps a priori inconnu doit être déterminé.

Il existe donc une quatrième inconnue en trois dimensions. Les paramètres à déterminer sont, suivant le repère : la longitude L, la latitude G, l'altitude H, et le biais d'horloge $\Delta T$. Les calculs s'effectuent dans un repère cartésien dans lequel les inconnues sont x, y, z, et $\Delta T$. Le changement vers un repère utilisable par l'utilisateur s'effectue seulement avant de présenter les résultats. Il est nécessaire de mesurer au moins une distance supplémentaire, donc de disposer d'au moins quatre satellites, pour résoudre un système de quatre équations à quatre inconnues.

Pour quatre mesures, les équations de navigation d'un système de type GPS sont, dans un repère cartésien,

$$(tr1 - t1).c = D1 = \sqrt{(x-x1)^2+(y-y1)^2+(z-z1)^2} + c.\,\Delta T$$

$$(tr2 - t2).c = D2 = \sqrt{(x-x2)^2+(y-y2)^2+(z-z2)^2} + c.\,\Delta T$$

$$(tr3 - t3).c = D3 = \sqrt{(x-x3)^2+(y-y3)^2+(z-z3)^2} + c.\,\Delta T$$

$$(tr4 - t4).c = D4 = \sqrt{(x-x4)^2+(y-y4)^2+(z-z4)^2} + c.\Delta T \qquad (2.1)$$

On verra par la suite comment ce système d'équations est modifié dans l'invention.

Dans ces équations, x y et z représentent les coordonnées inconnues du récepteur, tandis que xi, yi, et zi sont les coordonnées connues des satellites. Les dates ti et tri sont respectivement les signaux de date émis par les satellites et les dates de leur réception par le récepteur. Les coordonnées xi, yi, et zi sont connues parce que les satellites émettent à chaque instant des informations permettant de calculer leur position. Les informations transmises constituent l'almanach ou les éphémérides du système.

On rappelle par ailleurs que la longueur d'un vecteur est obtenue par un produit scalaire de la manière suivante :

$$D = (P.P)^{1/2} \text{ avec } P = (X, Y, Z) \qquad (2.2)$$

Le nombre d'équations nécessaires pour résoudre le système (2.1) peut être réduit si l'utilisateur dispose d'informations par ailleurs. On peut citer par exemple :

- l'altitude peut être considérée comme une constante, sur un certain intervalle de temps, pour les applications pédestres,
- le biais d'horloge $\Delta T$. Cette information est disponible après une première estimation, mais elle dérive. Au delà d'un temps dépendant des paramètres de qualité de l'horloge utilisateur, ce biais d'horloge n'est plus utilisable, et quatre mesures sont à nouveau nécessaires pour maintenir un niveau de précision acceptable. Dans l'invention, ce biais d'horloge pourrait par ailleurs être transmis par la station de base.

La résolution connue des équations de navigation est rappelée ci-dessous. Les équations (2.1) peuvent s'écrire de la manière suivante:

$$D=k(\chi) \tag{2.3}$$

Expression dans laquelle k est une matrice (inconnue) et où D représente les mesures (ti et tri ) et $\chi$ les inconnues (position du récepteur x, y et z ainsi que son biais d'horloge $\Delta$T).

Le problème est de trouver $\chi$ connaissant D. Soit $k^{-1}$ tel que

$$\chi = k^{-1} (D) \tag{2.4}$$

La difficulté est d'inverser la matrice k car elle n'est pas linéaire. Pour contourner la difficulté, on linéarise la matrice k en posant:

$$D = Dn + \Delta D \tag{2.5}$$

et

$$\Delta D = \chi n + \Delta \chi \tag{2.6}$$

et

où Dn est un jeu de mesure supposé et où $\Delta$D représente la correction de mesure. Typiquement Dn représente ti et $\Delta$D représente $\Delta$T. Pour le reste, $\chi$n est la meilleure solution connue (dernière position et dernier biais calculés) et $\Delta\chi$ est la correction de $\chi$n (inconnu au départ).

Pour linéariser, on dérive la matrice k par rapport à $\chi$ autour de $\chi$n,

soit

$$\Delta D = |\ \delta k\ /\ \delta\chi\ | \tag{2.7}$$

où

$$\Delta D = h.\Delta\chi \tag{2.8}$$

soit

$$\Delta\chi = h^{-1} \Delta D \tag{2.9}$$

La solution est alors :

$$\chi = \chi n + \Delta\chi \tag{2.10}$$

A l'aide d'un algorithme itératif, la solution converge rapidement. Lorsque le récepteur effectue plus de quatre mesures simultanées, les mesures supplémentaires sont incluses dans la résolution. La solution est proposée au sens des moindres carrés.

L'opération de linéarisation est obtenue soit par dérivation, soit par un développement au premier ordre des équations de navigation autour de la meilleure estimation de la position (c'est la dernière position calculée qui est généralement utilisée après la phase d'initialisation).

En reprenant les notations du début du paragraphe on obtient :

$$\Delta Di = (xn-xi).\Delta x\ /\ Dni + (yn-yi).\Delta y\ /\ Dni + (zn-zi).\Delta z\ /\ Dni + \Delta b \tag{2.11}$$

où (xn, yn, zn) est la meilleure estimation de ( x, y, z),

($\Delta$x,$\Delta$y,$\Delta$z,$\Delta$b) est l'écart entre la position et sa valeur estimée,

$\Delta$Di est l'écart entre la pseudo-distance mesurée et la distance nominale du ième satellite, et où

$\Delta$b = c.$\Delta$T est le biais commun entre toutes les distances.

Ces équations peuvent s'écrire de la manière suivante en notation matricielle :

$$
\begin{vmatrix} \Delta D1 \\ \Delta D2 \\ \Delta D3 \\ \Delta D4 \end{vmatrix}
=
\begin{vmatrix} \alpha 11 & \alpha 12 & \alpha 13 \\ \alpha 11 & \alpha 12 & \alpha 13 \\ \alpha 11 & \alpha 12 & \alpha 13 \\ \alpha 11 & \alpha 12 & \alpha 13 \end{vmatrix}
\begin{vmatrix} \Delta x \\ \Delta y \\ \Delta z \\ \Delta b \end{vmatrix}
\qquad (2.12)
$$

Les $\alpha$ij formant la matrice H, représentent les cosinus directeurs, angles entre la ligne de visée au ième satellite et la jème coordonnées.

D'autre part, nous avons :

$$\Delta \chi = [\Delta x\ \Delta y\ \Delta z\ \Delta b]\ transposé \qquad (2.13)$$

$$\Delta D1 = [\Delta D1\ \Delta D2\ \Delta D3\ \Delta D4]\ transposé \qquad (2.14)$$

L'expression linéaire est résolue par (2.9), (2.10).

Avec l'invention, il se rajoute une cinquième équation à l'expression (2.1). Cette équation est :

$$c.TA/2 = rho = \sqrt{(x\text{-}xe)^2 + (y\text{-}ye)^2 + (z\text{-}ze)^2}$$

dans laquelle xe, ye, et ze sont les coordonnées connues de la station de base dans le repère ECEF.

Ce système peut être résolu dans le repère géographique. On obtient à cet effet la matrice d'observation suivante (position uniquement) dans le repère géographique avec quatre satellites et un TA

$$
\begin{vmatrix} dPD1 \\ dPD2 \\ dPD3 \\ dPD4 \\ drho \end{vmatrix}
=
\begin{vmatrix} a1 & b1 & c1 & 1 \\ a2 & b2 & c2 & 1 \\ a3 & b3 & c3 & 1 \\ a4 & b4 & c4 & 1 \\ (L\text{-}Le)/rho & (G\text{-}Ge)/rho & (H\text{-}He)/rho & 0 \end{vmatrix}
\times
\begin{vmatrix} dL \\ dG \\ dH \\ dT \end{vmatrix}
$$

avec

$$
\begin{vmatrix} a1 & b1 & c1 \\ a2 & b2 & c2 \\ a3 & b3 & c3 \\ a4 & b4 & c4 \end{vmatrix}
=
\begin{vmatrix} (x\text{-}x1)/PD1 & (y\text{-}y1)/PD1 & (z\text{-}z1)/PD1 \\ (x\text{-}x2)/PD2 & (y\text{-}y2)/PD2 & (z\text{-}z2)/PD2 \\ (x\text{-}x3)/PD3 & (y\text{-}y3)/PD3 & (z\text{-}z3)/PD3 \\ (x\text{-}x4)/PD4 & (y\text{-}y4)/PD4 & (z\text{-}z4)/PD4 \end{vmatrix}
\ transposée
\ \times Tt/g
$$

avec

Pdi = pseudo distance du satellite i

rho = distance mobile à station de base = TA.c

Le, Ge, He coordonnées polaires de la station de base (He=0 ou presque) dans le repère géographique L = longitude, G = latitude, et H = altitude)

L, G, H coordonnées polaires du téléphone mobile dans le même repère

T = biais de temps (t récepteur - t GPS)

Tt/g matrice de passage du repère géographique vers le repère ECEF

$$Tt/g = \begin{vmatrix} dXt/dXw & dYt/dXw & dZt/dXw \\ dXt/dYw & dYt/dYw & dZt/dYw \\ dXt/dZw & dYt/dZw & dZt/dZw \end{vmatrix}$$

Ou bien ce système d'équations peut être résolu dans le repère ECEF. On obtient à cet effet la matrice d'observation suivante (position uniquement) avec quatre satellites et un TA

$$\begin{vmatrix} dPD1 \\ dPD2 \\ dPD3 \\ dPD4 \\ drho \end{vmatrix} = \begin{vmatrix} (x-x1)/PD1 & (y-y1)/PD1 & (z-z1)/PD1 & 1 \\ (x-x2)/PD2 & (y-y2)/PD2 & (z-z2)/PD2 & 1 \\ (x-x3)/PD3 & (y-y3)/PD3 & (z-z3)/PD3 & 1 \\ (x-x4)/PD4 & (y-y4)/PD4 & (z-z4)/PD4 & 1 \\ (L-Le)/rho & (G-Ge)/rho & (H-He)/rho & 0 \end{vmatrix} \times \begin{vmatrix} dx \\ dy \\ dz \\ dt \end{vmatrix}$$

On effectue aussi le changement de repère de la station de base du repère géographique au repère ECEF de la façon suivante :

$$\begin{vmatrix} xe \\ ye \\ ze \end{vmatrix} = \begin{vmatrix} dXt/dXw & dYt/dXw & dZt/dXw \\ dXt/dYw & dYt/dYw & dZt/dYw \\ dXt/dZw & dYt/dZw & dZt/dZw \end{vmatrix} \times \begin{vmatrix} Le \\ Ge \\ He \end{vmatrix}$$

Une fois connue la position du téléphone mobile dans le repère ECEF, un changement de repère est effectué vers le repère géographique (L, G, H) pour affichage ou utilisation par l'utilisateur.

Une solution instantanée peut être obtenue mais un traitement itératif des mesures permet d'obtenir de meilleures estimations de la position. Celui-ci utilise les informations antérieures ainsi que leur incertitude. C'est pourquoi, un filtrage de KALMAN est généralement utilisé pour les récepteurs mobiles.

Une technique dite de BANCROFT permettrait la résolution des équations sans linéarisation et sans itération. Elle permettrait, notamment, d'initialiser plus rapidement la résolution des équations.

L'état d'un système peut être caractérisé à un instant donné par un vecteur regroupant les paramètres permettant à l'utilisateur de connaître ce système. L'évolution de l'état de ce système est fonction de perturbations wk intentionnelles ou non et est décrite par un système d'équations appelé équation d'état : $x_{k+1} = F.x_{k+1} + G.w_k$ F est la matrice de transition d'état. L'état est observé par des mesures z. L'équation d'observation liant les mesures à l'état s'écrit : $Zk = H^t{}_k.x_k + v_k$ H est la matrice d'observation. Etant donné l'équation d'état, l'équation d'observation ainsi que les caractéristiques statistiques des perturbations et du bruit de mesure, il s'agit d'estimer au mieux un vecteur d'état à partir des mesures effectuées. Le critère utilisé par le filtrage de KALMAN est le critère des moindres carrés.

En variante, le téléphone mobile n'a pas nécessairement besoin de recevoir la position de la station de base par un message envoyé par cette station de base. Il peut obtenir cette information par des moyens complémentaires qui peuvent être les suivants. Les informations TA relatives à une station de base sont reçues par le téléphone mobile à diverses dates Tj. A chacune de ces dates Tj, on peut calculer pour la position Pj de ce téléphone mobile à cette date (même si cette position Pj est peu précisément estimée) une couronne où se situerait la station de base. Cette couronne centrée sur la position du téléphone mobile possède un rayon moyen de c.TA/2 et une largeur correspondant au double de la quantification de TA, c'est-à-dire d'environ 1100 m. Sachant que la station de base est fixe, on peut combiner les résultats de mesure dans le temps des différents TA, pour ces différentes positions Pj. On obtient alors une position précise de la station de base. En pratique, les algorithmes à appliquer sont exactement les mêmes que ceux utilisés dans le mode GPS, avec toutefois une prise en compte temporelle, aux différentes dates Tj, au lieu d'une prise en compte spatiale. Dans ce cas, le téléphone mobile joue, aux différentes dates Tj, le rôle des satellites et la station de base joue le rôle du téléphone mobile.

Au bout d'une durée suffisamment longue, par exemple une heure, le téléphone mobile qui est promené autour de la station de base a occupé diverses position Pj d'où la distance à la station de base est à chaque fois estimée. Dans l'invention, on mémorise ces différentes valeurs de TA, en relation avec les positions Pj mesurées au moment de la communication de ces durées TA. On effectue le calcul de position de la station de base lorsque le nombre de ces mesures Pj est suffisant, par exemple une dizaine de mesures de position Pj, différentes d'au moins 100 m (sur une des cordonnées L ou G) l'une de l'autre. En agissant ainsi, on peut en déduire, dans le téléphone mobile par le programme 13, une position précise de la station de base (sans que celle-ci soit munie de quelconques moyens de localisation GPS). Avec cette position précise, on peut alors selon ce qui a été expliqué précédemment fournir à tout instant une position plus précise du téléphone mobile en combinant les informations reçues des satellites et l'information de TA reçue de la station de base (ou de plusieurs stations de base) dont la position est maintenant connue précisément.

**Revendications**

1.  Procédé de localisation d'un téléphone (1) mobile dans lequel

    -   on met en place un récepteur (12) de radionavigation satellitaire dans le téléphone mobile,
    -   on capte des signaux radioélectriques envoyés par les satellites (S1-S4),
    -   on reçoit dans le téléphone mobile une information relative à la position ( xe, ye, ze) d'une station de base en relation avec ce téléphone mobile,
    -   on reçoit dans le téléphone mobile une information de distance (rho) du téléphone mobile à la station de base avec laquelle ce téléphone mobile est en relation, et
    -   on utilise ces signaux et ces informations pour déterminer la position du téléphone mobile, **caractérisé en ce que**
    -   l'information de distance du téléphone mobile à la station de base est transmise par la station de base sous la forme d'une indication de durée d'anticipation d'un système de téléphonie mobile de type TDMA.

2.  Procédé selon la revendication 1, **caractérisé en ce que**

    -   on reçoit de la station de base, comme signaux de signalisation, l'information de position et ou l'information de distance.

3.  Procédé selon l'une des revendications 1 à 2, **caractérisé en ce que**

    -   pour déterminer la position du téléphone mobile on linéarise une fonction de transfert liant des coordonnées du téléphone mobile à des mesures de signaux radioélectriques et de signaux de signalisation, et
    -   on calcule la position par application de cette fonction de transfert linéaire.

4.  Procédé selon la revendication 3, **caractérisé en ce que**

    -   pour déterminer la position du téléphone mobile on effectue des itérations de l'application de la fonction de transfert.

5.  Procédé selon l'une des revendications 1 à 5, **caractérisé en ce que**

    -   on effectue un filtrage, de préférence un filtrage de KALMAN, pour utiliser les signaux de signalisation de téléphonie mobile.

6.  Procédé selon l'une des revendications 1 à 5, **caractérisé en ce que**

    -   dans un filtrage de KALMAN on utilise un critère des moindres carrés.

7.  Procédé selon l'une des revendications 1 à 6, **caractérisé en ce que**

    -   on utilise des signaux de signalisation de téléphonie mobile pour déterminer la position d'une station de base.

**Claims**

1. Process for determining the location of a mobile telephone (1) in which

   - a satellite radio-navigation receiver (12) is placed in position in the mobile telephone,
   - radio electrical signals sent by the satellites (S1 - S4) are captured,
   - information is received in the mobile telephone relating to the position (xe, ye, ze) of a base station in relationship with this mobile telephone,
   - information is received in the mobile telephone of the distance (rho) of the mobile telephone from the base station with which this mobile telephone is in relationship, and
   - these signals and this information are used to determine the position of the mobile telephone, *characterised by* the fact that
   - the information of distance of the mobile telephone from the base station is transmitted by the base station in the form of an indication of the time advance of a mobile telephony system of TDMA type.

2. Process as described in claim 1, *characterised by* the fact that

   - the information of position or the information of distance is received from the base station as signalling signals.

3. Process as described in one of claims 1 to 2, *characterised by* the fact that

   - to determine the position of the mobile telephone, a transfer function linking co-ordinates of the mobile telephone with measurements of radio electrical signals and signalling signals is linearised, and
   - the position is calculated by application of this linear transfer function.

4. Process as described in claim 3, *characterised by* the fact that

   - iterations of the application of the transfer function are performed to determine the position of the mobile telephone.

5. Process as described in one of claims 1 to 5, *characterised by* the fact that

   - filtering, preferably KALMAN filtering, is performed to use the signalling signals of the mobile telephone.

6. Process as described in one of claims 1 to 5, *characterised by* the fact that

   - a least squares criterion is employed in KALMAN filtering.

7. Process as described in one of claims 1 to 6, *characterised by* the fact that

   - mobile telephony signalling signals are used to determine the position of a base station.

**Patentansprüche**

1. Verfahren zur Ortsbestimmung eines Mobiltelefons (1), bei dem

   - ein Empfänger (12) für Funknavigationssatelliten in einem Mobiltelefon angeordnet wird,
   - die durch die Satelliten (S1-S4) ausgesandten funkelektrischen Signale empfangen werden,
   - von einer Basisstation, die in Verbindung mit dem Mobiltelefon ist, im Mobiltelefon eine Information bezüglich der Position (xe, ye, ze) empfangen wird,
   - in dem Mobiltelefon eine Abstandsinformation (rho) des Mobiltelefons zur Basisstation empfangen wird, mit der das Mobiltelefon in Verbindung steht, und
   - diese Signale und diese Informationen verwendet werden, um die Position des Mobiltelefons zu bestimmen,

   **dadurch gekennzeichnet, daß**
   die Abstandsinformation des Mobiltelefons zur Basisstation durch die Basisstation in Form einer Angabe der Vorwegnahmezeit eines mobilen Telefonsystems der Art TDMA ist.

**2.** Verfahren nach Anspruch 1, **dadurch gekennzeichnet, daß** von der Basisstation als Meldesignal die Information der Position und/oder die Information des Abstands empfangen wird.

**3.** Verfahren nach einem der Ansprüche 1 oder 2, **dadurch gekennzeichnet, daß** für die Bestimmung der Position des Mobiltelefons eine Übertragungsfunktion, die die Koordinaten des Mobiltelefons mit den Messungen der funkelektrischen Signale und den Meldesignalen verbindet, linearisiert wird, und die Position berechnet wird, indem diese lineare Übertragungsfunktion angewendet wird.

**4.** Verfahren nach Anspruch 3, **dadurch gekennzeichnet, daß** für die Bestimmung der Position des Mobiltelefons Iterationen bei der Anwendung der Übertragungsfunktion ausgeführt werden.

**5.** Verfahren nach einem der Ansprüche 1 bis 4, **dadurch gekennzeichnet, daß** eine Filterung, vorzugsweise eine KALMAN-Filterung ausgeführt wird, um die Meldesignale des Mobiltelefons zu verwenden.

**6.** Verfahren nach einem der Ansprüche 1 bis 5, **dadurch gekennzeichnet, daß** bei einer KALMAN-Filterung das Kriterium der kleinsten Fehlerquadrate verwendet wird.

**7.** Verfahren nach einem der Ansprüche 1 bis 6, **dadurch gekennzeichnet, daß** die Meldesignale des Mobiltelefons verwendet werden, um die Position einer Basisstation zu bestimmen.

Fig. 1

Fig. 2